# EUROPÄISCHE PATENTSCHRIFT

(11) **EP 1 189 419 B1**
(45) Veröffentlichungstag und Bekanntmachung des Hinweises auf die Patenterteilung: **26.07.2006**
(21) Anmeldenummer: 01250312.4
(22) Anmeldetag: 01.09.2001
(51) Int. Cl.: H04M 9/08

(54) **Verfahren und Vorrichtung zur Elimination Lautsprecherinterferenzen aus Mikrofonsignalen**
Method and device for eliminating the loudspeaker interference on microphone signals
Procede et appareil pour eliminer l'interference d'un haut-parleur sur de signaux de microphone

(30) Priorität: 01.09.2000 DE 10043064
(43) Veröffentlichungstag der Anmeldung: 20.03.2002
(73) Patentinhaber: Ruwisch, Dietmar, Dr., 12557 Berlin (DE)
(72) Erfinder: Ruwisch, Dietmar, Dr., 12557 Berlin (DE)
(74) Vertreter: Scholz, Hartmut

(56) Entgegenhaltungen:
- WO-A-00/16497
- US-A- 5 329 587
- US-A- 5 475 731

## Beschreibung

Die Erfindung betrifft ein Verfahren für ein Filtersystem zum Entfernen von durch Lautsprecher erzeugten Schallsignalen aus einem Mikrofonsignal, bestehend aus einer Stereo-Samplingeinheit, die das interferenzbehaftete Mikrofonsignal sowie das interferierende Lautsprechersignal in der Zeit (t) abtastet und Samples x(t) und z(t) erzeugt, die einem Rechenwerk zugeführt werden, welches die Übertragungsfunktion H(f,T) zwischen Lautsprecher und Mikrofon ermittelt und diese an eine Filtereinheit übergibt, welche aus x(t), z(t) und H(f,T) das interferenzbefreite Mikrofonsignal y(t) erzeugt.

Bei vielen Anwendungen der Telekommunikation sowie der maschinellen Sprachverarbeitung tritt das Problem auf, daß das zur Spracheingabe verwendete Mikrofon neben dem zu übertragenden bzw. anderweitig zu verarbeitenden Sprachsignal auch solche Signale aufnimmt, die innerhalb desselben akustischen Systems von einem oder mehreren Lautsprechern erzeugt werden. Solche Lautsprecherinterferenzen führen in den unterschiedlichen Anwendungen zu diversen Problemen. Der bekannteste Effekt tritt beim Telefonieren mit einer sogenannten Freisprecheinrichtung, z.B. in einem Kraftfahrzeug auf, bei der das Signal des Gesprächspartners verstärkt und über einen Lautsprecher ausgegeben wird. Dieses Signal wird vom Freisprechmikrofon zusätzlich zu den Umgebungsgeräuschen und dem Sprachsignal des Fahrers zum Gesprächspartner übertragen. Dies führt dazu, daß der entfernte Gesprächspartner ein "Echo" seiner eigenen Stimme wahrnimmt, welches um so störender wirkt, je länger die Signallaufzeit ist. In Mobiltelefonnetzen, bei denen Signallaufzeiten von bis zu 300 ms auftreten, stellt dies ein erhebliches Problem dar. Da die Kodierer der Mobilfunknetze nichtlineare Verzerrungen verursachen, ist eine nachträgliche Echo-Elimination in einem solchen Fall erheblich erschwert. Es ist daher zwingend erforderlich, die erläuterte Lautsprecherinterferenz am Ort ihrer Entstehung, im genannten Beispiel also in der Kfz-Freisprecheinrichtung, zu eliminieren.

Ein anderes Beispiel für die Probleme, die durch Lautsprecherinterferenzen erzeugt werden, betrifft Systeme zur maschinellen Spracherkennung. Da solche Systeme zunehmende Verbreitung finden, ist auch hier die Elimination von Lautsprechersignalen aus dem Mikrofonsignal, welches das Spracherkennungssystem speist, von größter Bedeutung. Spracherkennungssysteme benötigen ein möglichst störungsfreies Eingangssignal, um mit zufriedenstellender Erkennungsrate zu arbeiten. Herkömmliche Systeme, die z.B. wiederum im Kfz Anwendung finden, besitzen daher eine sogenannte "push-to-talk"-Taste, die vorhandene Lautsprecher stumm schaltet, bevor eine Spracheingabe akzeptiert wird. Dies konterkariert aber die erwünschte Freihandbedienung, die das Hauptargument für den Einsatz eines Spracherkennungssystems ist.

Die bekannten Verfahren zur Lösung des geschilderten Problems werden auf Grund des erstgenannten Anwendungsbeispiels unter dem Begriff "Echo-Cancelling" zusammengefaßt. Allen bekannten Verfahren liegen Varianten eines iterativen Verfahrens (LMS für "least mean square") zugrunde, welches auf der Minimierung des Echosignals durch sukzessive Anpassung von Filterparametern basiert.

Das Grundprinzip dieser Algorithmen, ist z.B. aus dem Lehrbuch Peter Vary: Digitale Sprachsignalverarbeitung, Kap. 13, Teubner Verlag, Stuttgart, 1998, bekannt. Ferner sind sie in der US 5,475,731 und der EP 0 870 365 beschrieben, und verschiedene Verbesserungsvorschläge sind aus der EP 0 988 744 und der WO 00/16497 bekannt. All diesen Verfahren ist gemeinsam, daß sie nur dann ein optimales Ergebnis erzielen, wenn das Mikrofon ausschließlich das Lautsprechersignal aufnimmt. Sobald zusätzlich nichtstationäre Störgeräusche vorhanden sind, wie sie z.B. in einem fahrenden Kfz auftreten, oder an beiden Enden der Telefonleitung gleichzeitig gesprochen wird, bei einer sog. Gegensprechsituation, nimmt die Leistungsfähigkeit aller bekannten Verfahren ab.

Dies gilt auch für ein Verfahren, das als affine Projektion aus der US 5,539,731 bekannt ist. Zwar zeichnet sich dieses Verfahren durch ein besseres Konvergenzverhalten aus, doch ist hierzu ein erhöhter Rechenaufwand erforderlich.

Wie bei allen vorgenannten Verfahren führen Gegensprechsituationen oder Störgeräusche im Mikrofon auch bei diesem Verfahren zu Konvergenzproblemen. Alle genannten Verfahren weisen außerdem das Problem auf, daß sich mit zunehmender Filterlänge das Konvergenzverhalten der Algorithmen drastisch verschlechtert.

Aufgabe der vorliegenden Erfindung ist eine effektive Elimination von Lautsprecherinterferenzen aus dem zur Spracheingabe verwendeten Mikrofonsignal.

Gelöst wird diese Aufgabe durch die Maßnahmen gemäß Anspruch 1, insbesondere durch ein Rechenwerk, in dem unter Berücksichtigung der Signallaufzeit vom Lautsprecher zum Mikrofon, die im Laufzeitglied bestimmt wird, mit einem Fouriertransformator, der die Spektren von Mikrofon- und Lautsprechersignal X(f,T) und Z(f,T) ermittelt, und aus diesen durch Multiplikations-, Glättungs- und Divisonsschichten und eine Faltungsschicht die Übertragungsfunktion H(f,T) berechnet.

Durch diese Maßnahmen wird eine effektive Elimination von Lautsprecherinterferenzen aus dem zur Spracheingabe verwendeten Mikrofonsignal erzielt und eine "push-to-talk"-Taste überflüssig gemacht. Erzeugt ein durch Spracheingabe gesteuertes System, beispielsweise ein sprachgesteuertes Fernsehgerät, das Lautsprechersignal selbst, so wird erfindungsgemäß vermieden, daß vom Gerät selbst erzeugte Sprachsignale als Befehle für die Sprachsteuerung verarbeitet werden.

Da der Anwendungsbereich der vorliegenden Erfindung jedoch erheblich über dieses Beispiel hinausgeht, wird hier allgemeiner von einer Elimination von Lautsprecherinterferenzen aus einem Mikrofonsignal gesprochen.

In der vorliegenden Erfindung wird ein neuartiges Verfahren vorgestellt, welches durch Benutzung eines netzartigen Rechenwerks die Übertragungsfunktion des Lautsprecher-Raum-Systems auf direktem Wege bestimmt. Das Verfahren zeichnet sich durch einen sehr geringen Rechenaufwand aus und ist äußerst robust gegen Störgeräusche und Gegensprechsituationen, da es nicht wie alle anderen Verfahren von dem Spezialfall ausgeht, daß außer dem Lautsprechersignal keine weiteren, nichtstationären Signale vom Mikrofon aufgenommen werden.

Auch für sehr lange Filter konvergieren diese Maßnahmen problemlos, die Filterlänge ist nur durch den verfügbaren Speicher begrenzt. Das System ist sehr einfach auf beliebigen Hardware-Plattformen implementierbar; es ist voll adaptiv und muß nicht auf erwartete Signallaufzeiten vorkonfiguriert werden. Die in anderen Systemen nötige Detektion von Gegensprechsituationen ist nicht erforderlich. Das System läuft stabil, sobald ein Lautsprechersignal ausreichender Intensität verfügbar ist. Änderungen der akustischen Bedingungen folgt das Verfahren automatisch binnen kürzester Zeit.

Weitere vorteilhafte Maßnahmen sind in den Unteransprüchen beschrieben. Die Erfindung ist in der beiliegenden Zeichnung dargestellt und wird nachfolgend näher beschrieben; es zeigt:

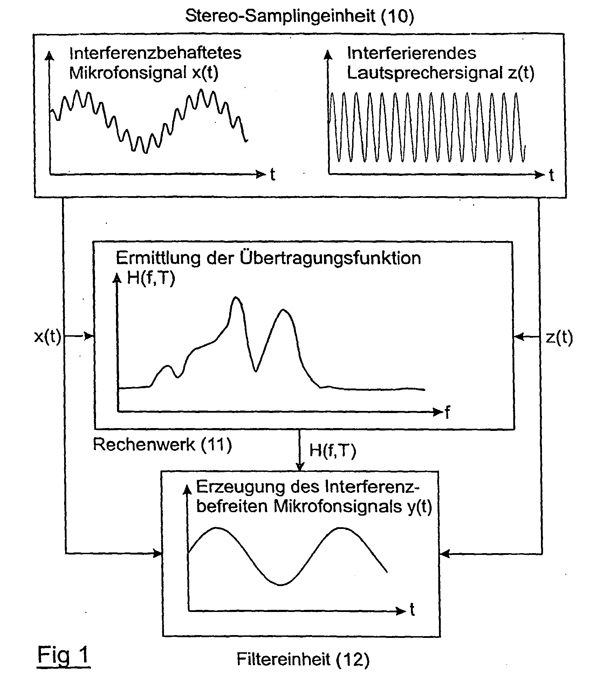

- **Figur 1**: das erfindungsgemäße Gesamtsystem zur Interferenzfilterung und -elimination;

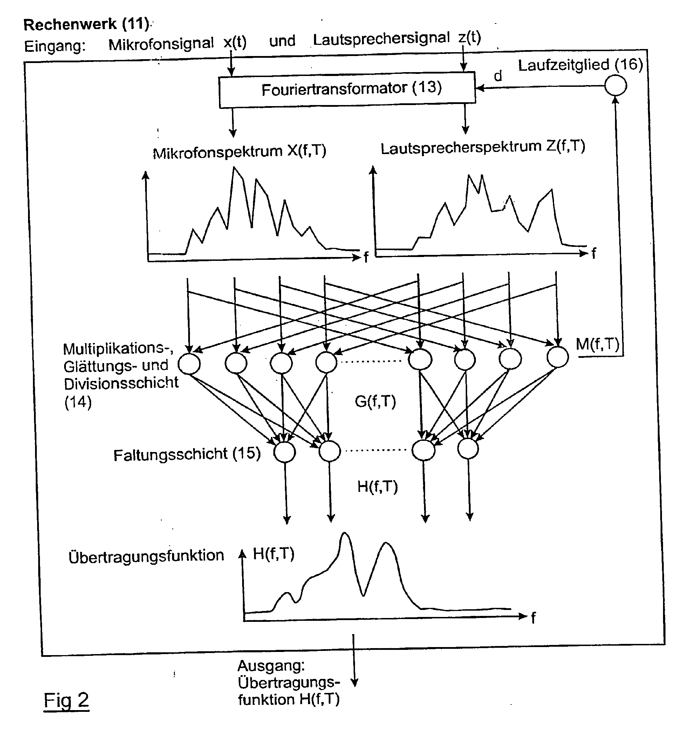

- **Figur 2**: das Rechenwerk zur Interferenzelimination nach Figur 1, welches unter Berücksichtigung der Signallaufzeit d vom Lautsprecher zum Mikrofon, die im Laufzeitglied bestimmt wird, wobei in einem Fouriertransformator die Spektren von Mikrofon- und Lautsprechersignal X(f,T) und Z(f,T) ermittelt werden, aus denen wiederum durch Multiplikations-, Glättungs-und Divisonsschichten sowie eine Faltungsschicht die Übertragungsfunktion H(f,T) berechnet wird;

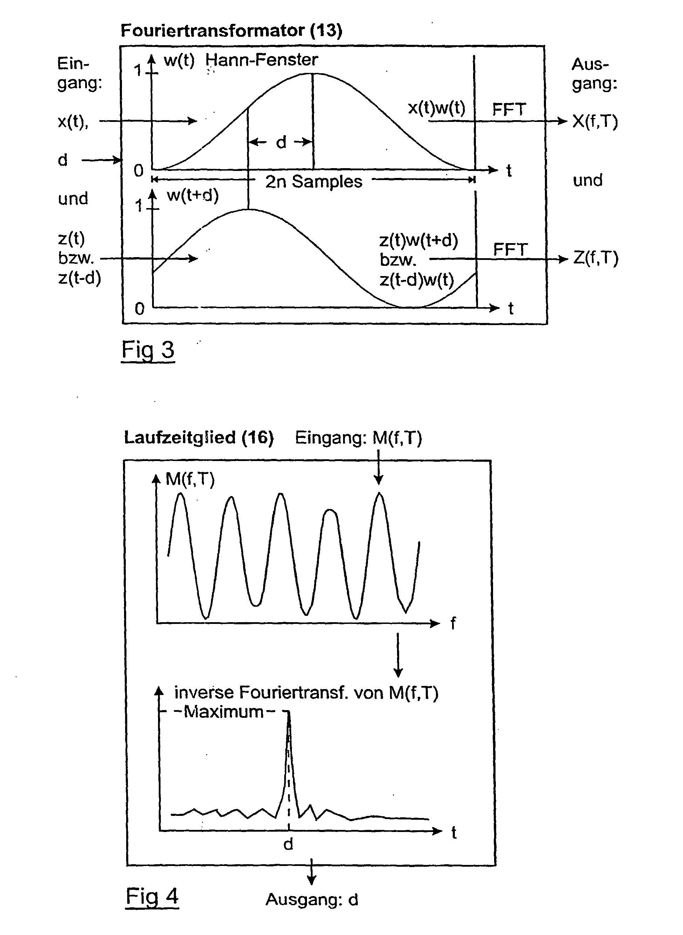

- **Figur 3**: die Funktion des Fouriertransformators, der die Spektren des Mikrofonsignals und das Lautsprechersignals zum Zeitpunkt T, X(f,T) und Z(f,T) aus je einem Frame von 2n Samples der Zeitsignale x(t) und z(t) ermittelt, wobei die Frames mit einer Fensterfunktion w(t), z.B. einem Hann-Fenster w(t)=(1-cosπt/n)/2), multipliziert werden, und das Lautsprechersignal um d Samples verzögert oder das Fenster um d Samples rotiert wird;
- **Figur 4**: die Funktion des Laufzeitglieds, welches die Signallaufzeit d zwischen Mikrofon und Lautsprecher durch Maximumdetektion auf der inversen Fouriertransformierten von M(f,T) bestimmt;

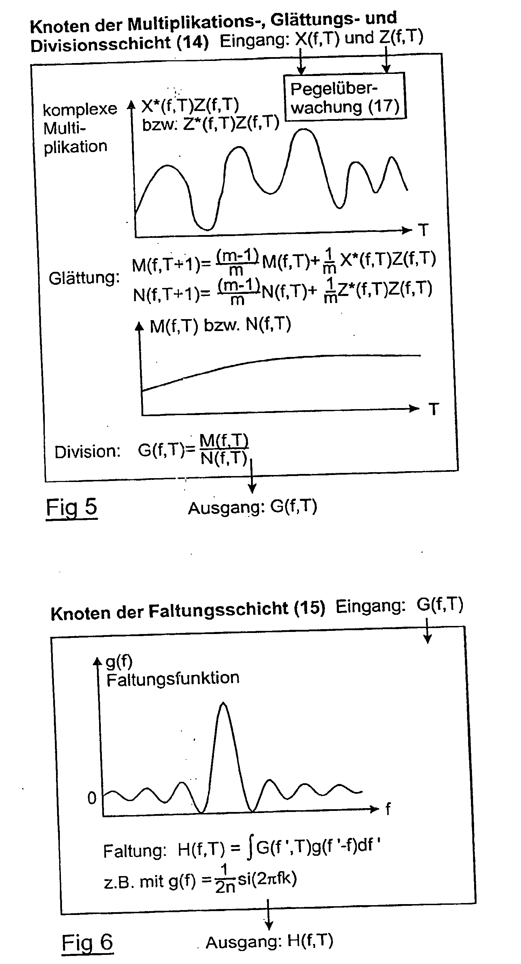

- **Figur 5**: die Funktion eines Knotens der Multiplikations-, Glättungs- und Divisonsschicht, wenn die Pegelüberwachung zur Detektierung einer ausreichenden Signalenergie, die zu jedem Zeitpunkt T und für eine bestimmte Frequenz f M(f,T) ermittelt wird; das mit Hilfe der Abklingkonstanten m geglättete Produkt von Mikrofonspektrum X(f,T) und komplex konjugiertem Lautsprecherspektrum Z*(f,T) ; wobei N(f,T) als geglättetes Betragsquadrat des Lautsprecherspektrums berechnet und M(f,T) durch N(f,T) dividiert wird, wodurch die Interferenzfunktion G(f,T) entsteht;

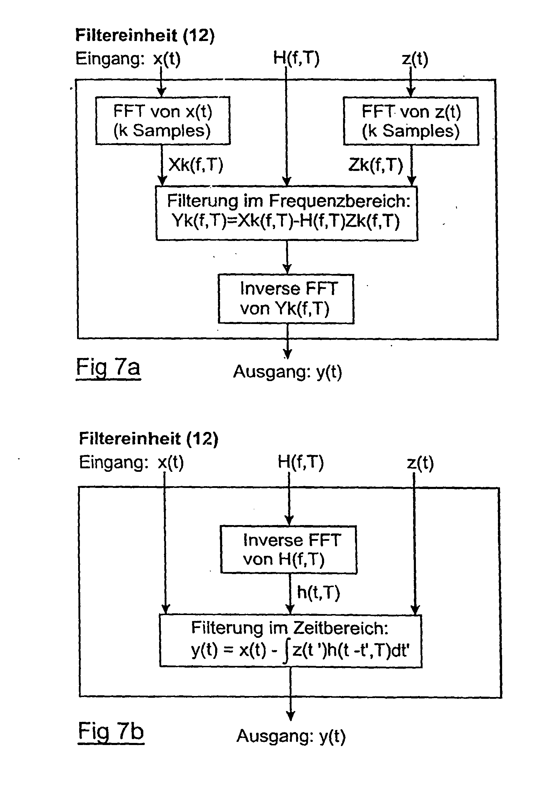

- **Figur 6**: die Funktion einer Faltungsschicht, welche für alle Frequenzen f zu einem bestimmten Zeitpunkt T die Interferenzfunktion G(f,T) mit einer Faltungsfunktion g(f), z.B. Fouriertransformierte der Kastenfunktion, faltet, wodurch die Übertragungsfunktion H(f,T) entsteht;
- **Figur 7a**: eine Filtereinheit, in der die Interferenz des Lautsprechersignals z(t) mit Hilfe der Übertragungsfunktion H(f,T) aus dem Mikrofonsignal x(t) entfernt und das interferenzbefreite Mikrofonsignal y(t) erzeugt wird, wobei entweder aus den Zeitsignalen x(t) und z(t) durch Fouriertransformation das aus k Moden bestehende Spektrum Xk(f,T) bzw. Zk(f,T) erzeugt wird, bei dem sodann Zk(f,T) mit H(f,T) multipliziert und von Xk(f,T) subtrahiert wird, so daß Yk(f,T) entsteht, woraus y(t) durch inverse Fouriertransformation hervorgeht, oder
- **Figur 7b**: im Zeitbereich z(t) mit h(t,T) gefaltet und von x(t) subtrahiert wird, so daß y(t) entsteht, wobei h(t,T) zuvor durch inverse Fouriertransformation aus H(f,T) berechnet wird.

Die in der Figur 1 dargestellte Erfindung wird im Folgenden anhand eines Ausführungsbeispiels näher erläutert. Zunächst wird ein Mikrofonsignal zusammen mit einem Lautsprechersignal, welches neben dem eigentlichen Nutzsignal vom Mikrofon aufgenommen wird, in einer Stereo-Sampling-Einheit 10 abgetastet und digitalisiert.

Auf diese Weise erhält man in der Zeit t die Samples x(t) und z(t) von Mikrofon- und Lautsprechersignal. Im Rechenwerk 11 wird aus diesen Signalen die Übertragungsfunktion H(f,T) zwischen Lautsprecher und Mikrofon ermittelt.

Figur 2 zeigt das Rechenwerk 11, bei dem in einem Fouriertransformator 13 die Zeitsignale x(t) und z(t) zu Frames aus jeweils 2n Samples gruppiert werden, aus denen zum Zeitpunkt T die Spektren X(f,T) und Z(f,T) berechnet werden.

Wie Figur 3 zeigt, werden dazu beide Frames mit einer Fensterfunktion w(t) multipliziert, wobei die auf das Lautsprechersignal angewandte Fensterfunktion zuvor um die Signallaufzeit d zwischen Lautsprecher und Mikrofon rotiert wird, d.h. y(t) wird multipliziert mit w(t+d).

Wie Figur 4 zeigt, wird der Wert von d im Laufzeitglied 16 ermittelt und dient der Kompensation der Zeitverzögerung, mit der das Lautsprechersignal im Mikrofon eintrifft. Diese Kompensation gelingt umso besser, je kleiner die Laufzeit d im Verhältnis zur Framelänge 2n ist. In einer anderen Ausführung der Erfindung wird die Verzögerungszeit explizit kompensiert, indem das um d verzögerte Lautsprechersignal z(t-d) der Fensterung und der Fouriertransformation unterzogen wird.

Auf diese Weise wird die Signallaufzeit exakt kompensiert, allerdings sind zum Verzögern des Lautsprechersignals Speicher von entsprechender Größe erforderlich. In einer Variante dieser Ausführung wird die Fensterfunktion erst im Anschluß an die Fouriertransformation von x(t) und z(t) angewandt, indem die Spektren X(f,T) und Z(f,T) mit der Fouriertransformierten der Fensterfunktion w(t) gefaltet werden.

Bei geeigneter Wahl der Fensterfunktion, beispielsweise einem Hann-Fenster, bei dem w(t)=(1-cosπt/n)/2) ist, ist diese Operation der Anwendung der Fensterfunktion im Zeitbereich vorzuziehen, da dafür die Fensterfunktion nicht explizit vorgehalten werden muß.

Die im Fouriertransformator 13 berechneten Spektren werden der Multiplikations-, Glättungs- und Divisionsschiebt 14 zugeführt. Diese Schichten des Rechenwerks 11 besitzen n Knoten, wobei jeder Knoten eine durch die Frequenz f gekennzeichnete spektrale Mode bearbeitet.

Wie Figur 5 zeigt, wird in jedem Knoten zunächst von einer regelüberwachung 17 überprüft, ob ausreichend spektrale Intensität für die folgenden Operationen zur Verfügung steht. Nur für solche Moden f, bei denen X(f,T) und/oder Y(f,T) zum Zeitpunkt T vorgegebene Schwellen überschreiten, wird die Interferenzfunktion G(f,T) berechnet. Bei Moden mit unterschwelligen spektralen Amplituden wird für G(f,T) der Wert von G(f,T-1) des vorangegangenen Zeitpunkts übernommen.

Für Moden mit überschwelliger Intensität wird das Lautsprecherspektrum Z(f,T) mit seinem komplex konjugierten Lautsprecherspektrum Z*(f,T) multipliziert und mit einer Abklingkonstanten m geglättet, wodurch N(f,T) entsteht.

Auf die gleiche Weise entsteht M(f,T) durch Multiplikation des Spektrum des Mikrofonsignals X(f,T) mit dem komplex konjugierten Lautsprecherspektrum Z*(f,T) und anschließender Glättung mit der Abklingkonstanten m. Die Interferenzfunktion G(f,T) erhält man sodann durch Division von M(f,T) durch N(f,T). Eine gewisse, von der Größe der Abklingkonstanten m abhängige Zeit nach Einschalten des Systems oder nach Änderung der akustischen Eigenschaften des Übertragungsraums entspricht G(f,T) im Wesentlichen bereits der gesuchten Übertragungsfunktion. Das Ergebnis ist korrekt auch in Gegenwart von Störgeräuschen und in Gegensprechsituationen.

Vor der Entfernung der Lautsprecherinterferenz z(t) aus dem Mikrofonsignal x(t) in der Filtereinheit 13 wird G(f,T) noch der Faltungsschicht 15 übergeben, die zur Reduktion der spektralen Auflösung dient. Dadurch läßt sich die eigentliche Filterung in kleineren Frames bestehend aus 2k<2n Samples ausführen, woraus bei einer Filterung im Frequenzbereich eine kürzere Verweildauer des Signals in der Vorrichtung resultiert.

Aus der Größe M(f,T), die wie erläutert in der Multiplikations-, Glättungs- und Divisionsschicht 14 bestimmt wird, ermittelt das Laufzeitglied 16 die Signallaufzeit zwischen Lautsprecher und Mikrofon, die im Fouriertransformator 13 benötigt wird. Dazu wird M(f,T) einer inversen Fouriertransformation unterzogen. Das Maximum des dabei resultierenden Signals befindet sich, wie Figur 4 zeigt, bei d, wobei d der gesuchten Laufzeit entspricht. Dabei ist zu beachten, daß in die so definierte Laufzeit sämtliche Reflexionen im umgebenden Raum eingehen. Daher ist d im allgemeinen etwas größer als der Quotient aus dem Mikrofon-Lautsprecher-Abstand und der Schallgeschwindigkeit.

In der Faltungsschicht 15 wird aus der Interferenzfunktion G(f,T) die gesuchte Übertragungsfunktion H(f,T) ermittelt, die anschließend in der Filtereinheit 12 angewandt wird. H(f,T) entsteht, indem G(f,T) im Frequenzbereich mit einer Funktion g(f) gefaltet und lediglich im vergröberten Raster ausgewertet wird. Diese Operation führt zu einer Reduktion der spektralen Auflösung der Übertragungsfunktion H(f,T), so daß diese nur noch aus k Moden besteht, während G(f,T) noch n>k Moden besitzt.

Die Reduktion der spektralen Auflösung ist im Allgemeinen dann notwendig, wenn die Filterung in der Filtereinheit 12 im Frequenzbereich vollzogen wird. Diese Filterung führt nämlich zu einer Zeitverzögerung proportional zur Länge des Filters. Geschieht die Filterung im Zeitbereich, ist die Operation auch ohne eine von der Filterlänge abhängige Zeitverzögerung durchführbar.

In einer solchen Ausführung der Erfindung ist auch n=k möglich, d.h. eine Filterung mit der vollen spektralen Auflösung. Die beschriebene Faltung ist in diesem Fall überflüssig. Die so ermittelte Übertragungsfunktion H(f,T) wird der Filtereinheit 12 übergeben, in der die eigentliche Befreiung des Mikrofonsignals von den Lautsprecherinterferenzen erfolgt.

Für die Filtereinheit 12 werden im Folgenden zwei verschiedene Ausführungen beschrieben. In der ersten Ausführung, wie sie Figur 7a zeigt, werden die Zeitsignale des Mikrofon- und des Lautsprechersignals erneut einer Fouriertransformation unterzogen. Dazu werden 2k Samples zu einem Frame zusammengefaßt. Das Lautsprechersignal wird dabei gegenüber dem Mikrofonsignal um d Samples verzögert, um die Signallaufzeit zwischen Lautsprecher und Mikrofon zu kompensieren.

Aus diesen Transformationen resultieren die Spektren Xk(f,T) für das Mikrofonsignal und Zk(f,T) für das Lautsprechersignal, die wie die Übertragungsfunktion H(f,T) aus k Moden bestehen. Durch Multiplikation von H(f,T) mit Zk(f,T) und Subtraktion von Xk(f,T) erhält man das gefilterte Spektrum Yk(f,T), aus dem durch inverse Fouriertransformation das interferenzbefreite Sprachsignal y(t) erzeugt wird. Dieses kann nach Digital-Analog-Wandlung in einem Lautsprecher hörbar gemacht werden.

In einer anderen Ausführung der Erfindung, wie sie die Figur 7b zeigt, wird in der Filtereinheit 12 die übertragungsfunktion H(f,T) mittels inverser Fouriertransformation in eine Stoßantwort h(t,T) umgerechnet. Die Filterung erfolgt dann im Zeitbereich, indem h(t,T) mit z(t) gefaltet und von x(t) subtrahiert wird, um das interferenzbefreite Sprachsignal y(t) zu erzeugen.

### Bezugszeichen

- 10: Stereo-Samplingeinheit, die ein Mikrofonsignal x(t) sowie ein interferierendes Lautsprechersignal z(t) abtastet und digitalisiert
- 11: Netzartiges Rechenwerk, das die Zeitsignale x(t) und z(t) in Frames untergliedert, daraus mittels Fouriertransformation das Mikrofonspektrum X(f,T) sowie das Lautsprecherspektrum Z(f,T) erzeugt und eine Übertragungsfunktion H(f,T) ermittelt
- 12: Filtereinheit, die mit Hilfe der Übertragungsfunktion H(f,T) aus dem Mikrofonsignal x(t) und dem Lautsprechsignal das interferenzbefreite Mikrofonsignal y(t) erzeugt
- 13: Fouriertransformator, der Signalverzögerungen und/oder Fensterfunktionen anwendet und die Zeit-signale x(t) und z(t) zu Spektren X (f, T) bzw. Z(f,T) transformiert
- 14: Multiplikations-, Glättungs- und Divisonsschicht des netzartigen Rechenwerks (11)
- 15: Faltungsschicht des netzartigen Rechenwerks (11)
- 16: Laufzeitglied, welches die Laufzeit d zwischen Lautsprecher und Mikrofon ermittelt
- 17: Pegelüberwachung für die Spektren von Lautsprecher- und Mikrofonsignal
- d: Verzögerungszeit im Fouriertransformator (13), bestimmt durch Laufzeitglied (16)
- f: Frequenz, durch die sich die Moden eines Spektrums unterscheiden
- G(f,T): Interferenzfunktion, aus der per Faltung mit g(f) die Übertragungsfunktion H(f,T) gebildet wird
- g(f): Funktion im Spektrum, mit der G(f,T) gefaltet wird, um H(f,T) zu erzeugen
- H(f,T): Übertragungsfunktion des Lautsprecher-Raum-Systems
- h(t,T): Stoßantwort, inverse Fouriertransformierte der Übertragungsfunktion H(f,T)
- k: Anzahl der Moden in den Spektren Xk(f,T), Yk(f,T), Zk(f,T) sowie in H(f,T)
- m: Abklingkonstante bei der Glättung zur Bestimmung von M(f,T) und N(f,T)
- n: Anzahl der Moden in X(f,T), Y(f,T), Z(f, T), M(f,T), N(f,T) und G(f,T)
- M(f,T): geglättetes Produkt von Mikrofon- und komplex konjugiertem Lautsprecherspektrum
- N(f,T): geglättetes Betragsquadrat des Lautsprechersignalspektrums Z(f,T)
- t: Zeit zu der das Sprachsignal abgetastet wird
- T: Zeit zu der das Zeitsignal zu Frames und diese zu Spektren verarbeitet werden
- w(t): Fenster-Funktion, z.B. Hann-Fenster w(t)=(1-cosπt/n)/2
- x(t): Zeitsignal des durch Lautsprecherinterferenz gestörten Mikrofonsignals
- X(f,T): Mikrofonsignalspektrum aus n Moden, Mikrofonamplitude bei Frequenz f zur Zeit T
- Xk(f,T): Mikrofonsignalspektrum aus k Moden bestehend
- y(t): Zeitsignal des interferenzbefreiten Mikrofonsignals
- Y(f,T): Mikrofonsignalspektrum nach Entfernung der Interferenz des Lautsprechersignals
- Yk(f,T): Mikrofonsignalspektrum, aus k statt n Moden bestehend
- z(t): Zeitsignal des Lautsprechersignals
- Z(f,T): Lautsprecherspektrum aus n Moden, Lautsprecheramplitude bei Frequenz f zur Zeit T
- Zk(f,T): Lautsprecherspektrum aus k statt n Moden bestehend

## Patentansprüche

1. Ein Verfahren für ein Filtersystem zum Entfernen von durch Lautsprecher erzeugten Schallsignalen aus einem Mikrofonsignal, bestehend aus einer Stereo-Samplingeinheit, die das interferenzbehaftete Mikrofonsignal sowie das interferierende Lautsprechersignal in der Zeit (t) abtastet und Samples x(t) und z(t) erzeugt, die einem Rechenwerk zugeführt werden, welches die Übertragungsfunktion H(f,T) zwischen Lautsprecher und Mikrofon ermittelt und diese an eine Filtereinheit (12) übergibt, welche aus x(t), z(t) und H(f,T) das interferenzbefreite Mikrofonsignal y(t) erzeugt, **gekennzeichnet durch** ein Rechenwerk (11), in dem unter Berücksichtigung der Signallaufzeit (d) vom Lautsprecher zum Mikrofon, die im Laufzeitglied (16) bestimmt wird, mit einem Fouriertransformator (13), der die Spektren von Mikrofon- und Lautsprechersignal X(f,T) und Z(f,T) ermittelt, und aus diesen **durch** Multiplikations-, Glättungs- und Divisonsschichten (14) und eine Faltungsschicht (15) die Übertragungsfunktion H(f,T) berechnet.

2. Verfahren für ein Filtersystem nach Anspruch 1, **gekennzeichnet durch** einen Fouriertransformator (13), der die Spektren des Mikrofonsignals und das Lautsprechersignals zum Zeitpunkt T, X(f,T) und Z(f,T) aus je einem Frame von 2n Samples der Zeitsignale x(t) und z(t) ermittelt.

3. Verfahren für ein Filtersystem nach Anspruch 2, **dadurch gekennzeichnet, dass** die Frames mit einer Fensterfunktion w(t) multipliziert werden, wobei das Lautsprechersignal um d Samples verzögert.

4. Verfahren für ein Filtersystem nach Anspruch 3, **dadurch gekennzeichnet, dass** die Fensterfunktion w(t) um d Samples rotiert.

5. Verfahren für ein Filtersystem nach Anspruch 3, **dadurch gekennzeichnet, dass** die Fensterfunktion w(t) ein Hann-Fenster w(t)=(1-cosπt/n)/2) ist.

6. Verfahren für ein Filtersystem nach einem der Ansprüche 1 bis 5, **gekennzeichnet durch** die Funktion des Laufzeitglieds (16), welches die Signallaufzeit (d) zwischen Mikrofon und Lautsprecher **durch** Maximumdetektion auf der inversen Fouriertransformierten von M(f,T) bestimmt.

7. Verfahren für ein Filtersystem nach einem der Ansprüche 1 bis 6, **gekennzeichnet durch** eine Pegelüberwachung (17), die die Signalenergie detektiert und zu jedem Zeitpunkt (T) und für eine bestimmte Frequenz (f) eines geglätteten Produktes von Mikrofonspektrum und komplex konjugiertem Lautsprecherspektrum M(f,T) ermittelt.

8. Verfahren für ein Filtersystem nach Anspruch 7, **dadurch gekennzeichnet, dass** die Frequenz (f) des geglätteten Produkts von Mikrofonspektrum und komplex konjugiertem Lautsprecherspektrum M(f,T) mit Hilfe einer Abklingkonstanten (m), einem geglätteten Produkt von Mikrofonspektrum X(f,T) und einem komplex konjugiertem Lautsprecherspektrum Z*(f,T) ermittelt wird.

9. Verfahren für ein Filtersystem nach Anspruch 8, **dadurch gekennzeichnet, dass** ein geglättetes Betragsquadrat N(f,T) des Lautsprechersignalspektrums Z(f,T) als geglättetes Betragsquadrat des Lautsprecherspektrums berechnet, wobei M(f,T) durch N(f,T) dividiert wird und eine Interferenzfunktion G(f,T) entsteht.

10. Verfahren für ein Filtersystem nach einem der Ansprüche 1 bis 9, **gekennzeichnet durch** eine Faltungsschicht (15), welche für eine Vielzahl von (alle) Frequenzen f zu einem bestimmten Zeitpunkt T die Interferenzfunktion G(f,T) mit einer Faltungsfunktion g(f) faltet.

11. Verfahren für ein Filtersystem nach Anspruch 10, **dadurch gekennzeichnet, dass** die Faltungsfunktion g(f) die Fouriertransformierte einer Kastenfunktion ist.

12. Verfahren für ein Filtersystem nach Anspruch 10, **dadurch gekennzeichnet, dass** durch die Faltungsfunktion g(f) eine Übertragungsfunktion H(f,T) entsteht.

13. Verfahren für ein Filtersystem nach einem der Ansprüche 1 bis 12, **gekennzeichnet durch** eine Filtereinheit (12), in der die Interferenz eines Lautsprechersignals z(t) mit Hilfe einer Übertragungsfunktion H(f,T) aus einem Mikrofon-Zeitsignal x(t) oder einem Lautsprecher-Zeitsignal z(t) entfernt und ein interferenzbefreites Mikrofonsignal y(t) erzeugt wird.

14. Verfahren für ein Filtersystem nach Anspruch 13, **dadurch gekennzeichnet, dass** aus den Zeitsignalen x(t) und/oder z(t) durch Fouriertransformation ein aus k Moden bestehendes Spektrum Xk(f,T) erzeugt wird.

15. Verfahren für ein Filtersystem nach Anspruch 13, **dadurch gekennzeichnet, dass** aus den Zeitsignalen x(t) und/oder z(t) durch Fouriertransformation ein aus n Moden bestehendes Spektrum Zk(f,T) erzeugt wird.

16. Verfahren für ein Filtersystem nach einem der Ansprüche 1 bis 15, **dadurch gekennzeichnet, dass** ein Lautsprecherspektrum Zk(f,T) mit der Übertragungsfunktion H(f,T) multipliziert und von dem Mikrofonsignalspektrum Xk(f,T) subtrahiert wird, so dass ein Mikrofonsignalspecktrum Yk(f,T) entsteht, aus dem durch inverse Fouriertransformation ein Zeitsignal y(t) des interferenzbefreiten Mikrofonsignals hervorgeht.

17. Verfahren für ein Filtersystem nach einem der Ansprüche 1 bis 15, **dadurch gekennzeichnet, dass** ein Zeitsignal z(t) mit einer Stoßantwort h(t,T) einer inversen Fouriertransformierte der Übertragungsfunktion H(f,T) gefaltet und von einem Zeitsignal x(t) eines durch Lautsprecherinterferenz gestörten Mikrofonsignals subtrahiert wird, so dass ein Zeitsignal y(t) des interferenzbefreiten Mikrofonsignals entsteht, wobei die Stoßantwort h(t,T) zuvor durch inverse Fouriertransformation aus der Übertragungsfunktion H(f,T) zu berechnen ist.

## Claims

1. A method for a filter system for suppressing loudspeaker-induced interference signals from a microphone signal, comprising a stereo sampling unit which scans the microphone signal which is affected by interference and the interfering loudspeaker signal over the period of time (t) and produces samples x(t) and z(t) which are transmitted to a calculation unit which establishes the transfer function H(f, T) between the loudspeaker and the microphone and transfers this to a filter unit (12) which produces the interference-free microphone signal y(t) from x(t), z(t) and H(f, T), **characterised by** a calculation unit (11) in which, taking into consideration the signal propagation time (d) from the loudspeaker to the microphone determined in the delay unit (16), using a Fourier transformer (13) which establishes the spectra of the microphone signal X(f, T) and loudspeaker signal Z(f, T), the transfer function H(f, T) is calculated from the spectra by means of multiplication, smoothing and division layers (14) and a convolution layer (15).

2. Method for a filter system according to claim 1, **characterised by** a Fourier transformer (13) which establishes the spectra of the microphone signal and the loudspeaker signal at the time T, X(f, T) and Z(f, T) in each case from a frame of 2n samples of the time signals x(t) and z(t).

3. Method for a filter system according to claim 2, **characterised in that** the frames are multiplied by a window function w(t), with the loudspeaker signal being delayed by d samples.

4. Method for a filter system according to claim 3, **characterised in that** the window function w(t) rotates by d samples.

5. Method for a filter system according to claim 3, **characterised in that** the window function w(t) is a Hann window w(t)=(1-cospt/n)/2).

6. Method for a filter system according to any one of claims 1 to 5, **characterised by** the function of the delay unit (16) which determines the signal propagation time (d) between the microphone and the loudspeaker by means of maximum detection on the basis of the inverse Fourier transforms of M(f, T).

7. Method for a filter system according to any one of claims 1 to 6, **characterised by** a level monitoring system (17) which detects the signal energy and, at each time (T) and for a specific frequency (f) of a smoothed product of the microphone spectrum and complex-conjugated loudspeaker spectrum, establishes M(f, T).

8. Method for a filter system according to claim 7, **characterised in that** the frequency (f) of the smoothed product of the microphone spectrum and complex-conjugated loudspeaker spectrum M(f, T) is established by means of a decay constant (m), a smoothed product of the microphone spectrum X(f, T) and a complex-conjugated loudspeaker spectrum Z*(f, T).

9. Method for a filter system according to claim 8, **characterised in that** a smoothed square value N(f,T) of the loudspeaker signal spectrum Z(f, T) is calculated as a smoothed square value of the loudspeaker spectrum, M(f, T) being divided by N(f, T) and an interference function G(f, T) being produced.

10. Method for a filter system according to any one of claims 1 to 9, **characterised by** a convolution layer (15) which, for a plurality of (all) frequencies f at a specific time T, convolutes the interference function G(f, T) with a convolution function g(f).

11. Method for a filter system according to claim 10, **characterised in that** the convolution function g(f) is the Fourier transform of a box function.

12. Method for a filter system according to claim 10, **characterised in that** a transfer function H(f, T) is produced by the convolution function g(f).

13. Method for a filter system according to any one of claims 1 to 12, **characterised by** a filter unit (12) in which the interference of a loudspeaker signal z(t) is suppressed in a microphone time signal x(t) or a loudspeaker time signal z(t) by means of a transfer function H(f, T) and an interference-free microphone signal y(t) is produced.

14. Method for a filter system according to claim 13, **characterised in that** a spectrum Xk(f, T) which comprises k modes is produced from the time signal(s) x(t) and/or z(t) by means of Fourier transformation.

15. Method for a filter system according to claim 13, **characterised in that** a spectrum Zk(f, T) which comprises n modes is produced from the time signal(s) x(t) and/or z(t) by means of Fourier transformation.

16. Method for a filter system according to any one of claims 1 to 15, **characterised in that** a loudspeaker spectrum Zk(f, T) is multiplied by the transfer function H(f, T) and subtracted from the microphone signal spectrum Xk(f, T) so that a microphone signal spectrum Yk(f, T) is produced, from which a time signal y(t) of the interference-free microphone signal is produced by means of inverse Fourier transformation.

17. Method for a filter system according to any one of claims 1 to 15, **characterised in that** a time signal z(t) is convoluted with a step response h(t, T) of an inverse Fourier transform of the transfer function H(f, T) and is subtracted from a time signal x(t) of a microphone signal which is distorted by loudspeaker interference, so that a time signal y(t) of the interference-free microphone signal is produced, the step response h(t, T) having to be previously calculated from the transfer function H(f, T) by means of inverse Fourier transformation.

## Revendications

1. Un procédé pour un système de filtrage pour éliminer les signaux acoustiques générés par des haut-parleurs d'un signal de microphone, se composant d'une unité d'échantillonnage stéréo qui échantillonne le signal de microphone affecté d'interférences et échantillonne le signal de haut-parleur interférant pendant le temps (t) et génère des échantillons x(t) et z(t) qui sont amenés à une unité de calcul qui détermine la fonction de transfert H(f, T) entre haut-parleur et microphone et la transmet à une unité de filtrage (12) qui génère à partir de x(t), z(t) et H(f, T) le signal de microphone y(t) débarrassé des interférences, **caractérisé par** une unité de calcul (11) dans laquelle on calcule la fonction de transfert H(f, T), en tenant compte du temps de parcours des signaux (d) du haut-parleur vers le microphone, déterminé dans l'élément de retard (16), par un transformateur de Fourier (13) qui détermine les spectres des signaux du microphone et du haut-parleur X(f, T) et Z(f, T) et calcule à partir de ceux-ci la fonction de transfert H(f, T) par des couches de multiplication, de lissage et de division (14) et une couche de convolution (15).

2. Procédé pour un système de filtrage selon la revendication 1, **caractérisé par** un transformateur de Fourier (13) qui détermine les spectres du signal de microphone et du signal de haut-parleur à l'instant T, X(f, T) et Z(f, T), chaque fois à partir d'une trame de 2n échantillons des signaux horaires x(t) et z(t).

3. Procédé pour un système de filtrage selon la revendication 2, **caractérisé par le fait que** les trames sont multipliées par une fonction fenêtre w(t), le signal du haut-parleur étant retardé de d échantillons.

4. Procédé pour un système de filtrage selon la revendication 3, **caractérisé par le fait que** l'on fait tourner la fonction fenêtre w(t) de d échantillons.

5. Procédé pour un système de filtrage selon la revendication 3, **caractérisé par le fait que** la fonction fenêtre w(t) est une fenêtre de Hann w(t) = (1-cosπt/n)/2.

6. Procédé pour un système de filtrage selon l'une des revendications 1 à 5, **caractérisé par** la fonction de l'élément de retard (16) qui détermine le temps de parcours des signaux (d) entre microphone et haut-parleur par détection du maximum sur la transformée de Fourier inverse de M(f, T).

7. Procédé pour un système de filtrage selon l'une des revendications 1 à 6, **caractérisé par** une surveillance de niveau (17) qui détecte l'énergie du signal et la détermine à chaque instant (T) et pour une fréquence donnée (f) d'un produit lissé du spectre du microphone et du conjugué complexe du spectre du haut-parleur M(f, T).

8. Procédé pour un système de filtrage selon la revendication 7, **caractérisé par le fait que** la fréquence (f) du produit lissé du spectre du microphone et du conjugué complexe du spectre du haut-parleur M(f, T) est déterminée à l'aide d'un coefficient d'amortissement (m), d'un produit lissé du spectre du microphone X(f, T) et d'un conjugué complexe du spectre du haut-parleur Z*(f, T).

9. Procédé pour un système de filtrage selon la revendication 8, **caractérisé par le fait que** l'on calcule un carré scalaire lissé N(f, T) du spectre du signal du haut-parleur Z(f, T) en tant que carré scalaire lissé du spectre du haut-parleur, M(f, T) étant divisé par N(f, T) et une fonction interférence G(f, T) en résultant.

10. Procédé pour un système de filtrage selon l'une des revendications 1 à 9, **caractérisé par** une couche de convolution (15) qui convolue la fonction interférence G(f, T) avec une fonction de convolution g(f) pour un grand nombre de (toutes les) fréquences f à un instant T donné.

11. Procédé pour un système de filtrage selon la revendication 10, **caractérisé par le fait que** la fonction de convolution g(f) est la transformée de Fourier d'une fonction rectangulaire.

12. Procédé pour un système de filtrage selon la revendication 10, **caractérisé par le fait qu'**il résulte de la fonction de convolution g(f) une fonction de transfert H(f, T).

13. Procédé pour un système de filtrage selon l'une des revendications 1 à 12, **caractérisé par** une unité de filtrage (12) dans laquelle on élimine les interférences d'un signal de haut-parleur z(t) à l'aide d'une fonction de transfert H(f, T) à partir d'un signal horaire ou temporel de microphone x(t) ou d'un signal horaire ou temporel de haut-parleur z(t) et on génère un signal de microphone y(t) débarrassé des interférences.

14. Procédé pour un système de filtrage selon la revendication 13, **caractérisé par le fait que** l'on génère à partir des signaux horaires ou temporels x(t) et/ou z(t) par transformation de Fourier un spectre Xk(f, T) composé de k modes.

15. Procédé pour un système de filtrage selon la revendication 13, **caractérisé par le fait que** l'on génère à partir des signaux horaires ou temporels x(t) et/ou z(t) par transformation de Fourier un spectre Zk(f, T) composé de n modes.

16. Procédé pour un système de filtrage selon l'une des revendications 1 à 15, **caractérisé par le fait qu'**un spectre de haut-parleur Zk(f, T) est multiplié par la fonction de transfert H(f, T) et soustrait du spectre de signal de microphone Xk(f, T) de manière à obtenir un spectre de signal de microphone Yk(f, T) dont il résulte par transformation de Fourier inverse un signal temporel ou horaire y(t) du signal de microphone débarrassé des interférences.

17. Procédé pour un système de filtrage selon l'une des revendications 1 à 15, **caractérisé par le fait qu'**un signal horaire ou temporel z(t) est convolué avec une réponse impulsionnelle h(t, T) d'une transformée de Fourier inverse de la fonction de transfert H(f, T) et soustrait d'un signal horaire ou temporel x(t) d'un signal de microphone perturbé par des interférences de haut-parleur, de manière à obtenir un signal horaire ou temporel y(t) du signal de microphone débarrassé des interférences, la réponse impulsionnelle h(t, T) étant à calculer préalablement par transformation de Fourier inverse à partir de la fonction de transfert H(f, T).
